# EUROPÄISCHE PATENTSCHRIFT

(11) **EP 3 208 428 B1**
(45) Veröffentlichungstag und Bekanntmachung des Hinweises auf die Patenterteilung: **01.04.2020**
(21) Anmeldenummer: 16156681.5
(22) Anmeldetag: 22.02.2016
(51) Int. Cl.: F01D 11/00, F16J 15/06

(54) **DICHTUNGSANORDNUNG AUS KERAMISCHEN FASERVERBUND-WERKSTOFFEN**
SEALING ASSEMBLY MADE FROM CERAMIC FIBER COMPOSITE MATERIALS
AGENCEMENT D'ÉTANCHÉIFICATION EN MATÉRIAUX COMPOSITES À FIBRES CERAMIQUES

(43) Veröffentlichungstag der Anmeldung: 23.08.2017
(73) Patentinhaber: MTU Aero Engines AG, 80995 München (DE)
(72) Erfinder: Böck, Alexander, 82288 Kottgeisering (DE)

(56) Entgegenhaltungen:
- EP-A1- 2 412 929
- EP-A2- 2 784 272
- WO-A1-2015/157751
- GB-A- 2 271 396

## Beschreibung

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union (*FP7*/*2007-2013*) für Clean Sky Joint Technology Initiative gefördert.

Die Erfindung betrifft eine Dichtungsanordnung für eine Gasturbine umfassend ein erstes Bauteil, das wenigstens teilweise aus keramischen Faserverbundstoffen hergestellt ist, ein zweites Bauteil, das wenigstens teilweise aus keramischen Faserverbundstoffen hergestellt ist, ein Dichtungselement, das zwischen dem ersten Bauteil und dem zweiten Bauteil aufgenommen ist, wobei das Dichtungselement als Dichtungsstrang ausgebildet ist, insbesondere als Gewebeschlauch aus metallischen oder/und keramischen Materialien.

Zur Erhöhung von Wirkungsgraden oder zur Senkung des Gewichts wird in verschiedenen Bereichen des Maschinenbaus versucht, metallische Bauteile durch keramische Faserverbund-Werkstoffe (CMC) zu ersetzen. Wegen der geringeren nutzbaren Festigkeit sowie der komplexeren Herstellungsverfahren dieser Werkstoffe, müssen insbesondere größere Metallstrukturen dafür in kleine Einheiten zerlegt werden. Hierdurch ergeben sich zwischen den kleineren Einheiten, zusätzliche Dichtstellen, die für eine entsprechende Vorrichtung bzw. Maschine ausreichend abgedichtet werden müssen, um beispielsweise Leckagen oder ähnliches zu vermeiden.

Ein Beispiel eines Bauteils, das zumindest teilweise aus CMC gebildet ist und das eine Dichtstelle aufweist, ist aus der EP 2 412 929 A1 bekannt.

Aufgabe der Erfindung ist es, eine Lösung für die zusätzlichen Dichtstellen bereitzustellen.

Zur Lösung dieser Aufgabe wird eine Dichtungsanordnung gemäß Anspruch 1 vorgeschlagen. Die Fasern können dabei vorteilhaft so ausgerichtet sein, dass sie im Wesentlichen parallel zur Schnittebene des Schnittprofils liegen.

Durch die Ausgestaltung der Vertiefung mittels durchgängiger gekrümmter Fasern kann eine hohe Festigkeit der Vertiefung erreicht werden. Durch die entsprechende Wahl der Dimensionierung des Krümmungsradius kann vermieden werden, dass angeschnittene Fasern vorliegen. Mit dem Begriff durchgängig soll insbesondere ausgedrückt werden, dass die gekrümmten bzw. gebogenen Fasern durchlaufend oder ganz ausgebildet sind im Krümmungsbereich der Vertiefung.

Es ist bevorzugt, dass der Dichtungsstrang einen Gewebeschlauch mit einer elastischen oder/und deformierbaren Füllung umfasst, wobei die Füllung vorzugsweise aus sich in Längsrichtung des Dichtungsstrangs erstreckenden Keramikfasern gebildet ist.

Ein solcher Dichtungsstrang kann in seinen Dimensionen so ausgeführt werden, dass er passend für den Krümmungsradius des Innenabschnitts der Vertiefung ist. Ein solcher Dichtungsstrang kann aufgrund einer passenden Dimensionierung relativ große Spalten an der Dichtungsstelle zwischen dem ersten Bauteil und dem zweiten Bauteil überbrücken, so dass eine ausreichende Abdichtung der beiden Bauteile ermöglicht ist. Aufgrund der elastischen oder/und deformierbaren Füllung, kann sich der Dichtungsstrang optimal in die Vertiefung einpassen, so dass eine gute Dichtwirkung erreicht werden kann.

Es wird vorgeschlagen, dass im Bereich der Vertiefung des jeweiligen ersten oder zweiten Bauteils an wenigstens einem Rand der Vertiefung ein sich anschließender Flanschabschnitt ausgebildet ist. Betrachtet man eine solche Vertiefung in einer Lage, in der die Vertiefung im Wesentlichen horizontal ausgerichtet ist, so dass der Dichtungsstrang aufgrund der Schwerkraft in der Vertiefung bleiben würde, kann sich ein betreffender Flanschabschnitt entlang des Randes zusätzlich in vertikaler Richtung oder in horizontaler Richtung erstrecken. Anders ausgedrückt kann der Flanschabschnitt bezogen auf einen Querschnitt durch die Vertiefung als insbesondere parallele Verlängerung des Randes ausgebildet sein oder als insbesondere orthogonale Verlängerung des Randes ausgebildet sein.

Hierbei ist es bevorzugt, dass das erste und das zweite Bauteil mittels eines Flanschabschnitts oder mittels mehrerer Flanschabschnitte gegeneinander abgestützt sind. Ferner kann zwischen dem ersten Bauteil und dem zweiten Bauteil, die aneinander angeordnet sind, ein Dehnungsspalt ausgebildet sein. Das Vorsehen von wenigstens einem Flanschabschnitt an den beiden Bauteilen ermöglichen insbesondere bei thermischer Ausdehnung bzw. damit verbundener mechanischer Verschiebung der Bauteile ein gegenseitiges Abstützen der Bauteile aneinander. Dabei können im Betrieb durch die thermisch-mechanischen Verschiebungen die Dehnspalten stark verengt werden, so dass benachbarte Bauteile, insbesondere mit entsprechenden Flanschabschnitten direkt in Kontakt miteinander kommen.

Die Vertiefung des ersten Bauteils und die Vertiefung des zweiten Bauteils können vorzugsweise einander gegenüber angeordnet sein, derart dass der Dichtungsstrang von den beiden Vertiefungen umgeben und zwischen den beiden Vertiefungen aufgenommen ist. Durch die beiden Vertiefungen des ersten Bauteils und des zweiten Bauteils kann also eine Art kreisförmige oder ovale Aufnahme gebildet werden, in welcher der Dichtungsstrang aufgenommen wird. Dabei kann jeder der Vertiefungen eine Art Halbschale bilden.

Die vorliegende Erfindung betrifft ferner auch ein Turbinenzwischengehäuse für eine Gasturbine, insbesondere eine Fluggasturbine, umfassend: mehrere in Umfangsrichtung aufeinanderfolgend angeordnete Außenwandelemente; mehrere in Umfangsrichtung aufeinanderfolgend angeordnete Innenwandelemente, wobei die Außenwandelemente und die Innenwandelemente durch die einander zugewandten Innenseiten einen Strömungskanal (20) für Abgas begrenzen; mehrere in radialer Richtung zwischen einem betreffenden Außenwandelement und einem betreffenden Innenwandelement angeordnete Strebenverkleidungselemente, ein die Außenwandelemente und die Innenwandelemente umgebendes Außengehäuse, und eine ringförmige Haltestruktur, die einen Lagerbereich einer Welle der Gasturbine, insbesondere der Welle der Hochdruckturbine umgibt, wobei die Strebenverkleidungselemente derart ausgebildet sind, dass sie einen Aufnahmeraum aufweisen zur Aufnahme von Trägerelementen, die sich von der ringförmigen Haltestruktur in im Wesentlichen radialer Richtung zu dem Außengehäuse durch den Strömungskanal hindurch erstrecken, so dass durch den Strömungskanal strömendes Abgas durch die Strebenverkleidungselemente um die Trägerelemente herum geleitet wird, wobei es ferner wenigstens eine oben beschriebene Dichtungsanordnung umfasst, und wobei ein jeweiliges Außenwandelement und/oder ein jeweiliges Innenwandelement und/oder ein jeweiliges Strebenverkleidungselement ein erstes oder ein zweites Bauteil der wenigstens einen Dichtungsanordnung bildet.

Ferner betrifft die Erfindung auch eine Gasturbine, insbesondere Fluggasturbine, mit einem solchen Turbinenzwischengehäuse mit einer erfindungsgemäßen Dichtungsanordnung.

Turbinenzwischengehäuse von Gasturbinen, insbesondere Fluggasturbinen, dienen insbesondere dazu, die Abgase, welche die Hochdruckturbine verlassen, mit möglichst geringen aerodynamischen Verlusten an Strukturbauteilen und Leitungen vorbei in die Niederdruckturbine zu leiten. Ferner nimmt das Turbinenzwischengehäuse als tragende Struktur mindestens ein Lager der Welle der Hochdruckturbine auf. Ein Turbinenzwischengehäuse ist somit im Betrieb der Gasturbine hohen Belastungen ausgesetzt, insbesondere mechanischen und thermischen Belastungen.

Bei den mechanischen Beanspruchungen sind insbesondere Faktoren wie das Gewicht der eingesetzten Bauteile sowie deren strukturelle Verbindungen untereinander zu beachten. Bei herkömmlichen, insbesondere aus metallischen Materialien hergestellten Verkleidungselementen ist es beispielsweise üblich, die Außenwandelemente und die Innenwandelemente mittels der Strebenverkleidungselemente miteinander so zu verbinden, dass diese gesamte Struktur am Außengehäuse befestigt und abgestützt ist, wobei die Innenwandelemente an den Strebenverkleidungselementen befestigt sind, welche wiederum mit den Außenwandelementen verbunden sind. Dies führt zur Übertragung von mechanischen und auch thermischen Belastungen von den angesprochenen Bauteilen auf das Außengehäuse.

Durch den Einsatz von keramischen Faserverbund-Werkstoffen, die nachfolgend vereinfacht als CMC bezeichnet werden, bei einem Turbinenzwischengehäuse kann gegenüber metallischen Bauteilen Gewicht eingespart werden. Allerdings ist dabei zu beachten, dass CMC-Bauteile verglichen mit metallischen Bauteilen wegen ihrer ungünstigen Versagenscharakteristik eine geringere nutzbare Festigkeit aufweisen, so dass insbesondere größere (flächige) Metallbauteile in kleinere CMC-Einheiten aufgeteilt werden sollten. Durch die im Zusammenhang mit der Verwendung von CMC Außenwandelemente bzw. die Innenwandelemente gewählte Kopplung an unterschiedlichen Bauteilen (Außengehäuse bzw. Haltestruktur) sind die Außenwandelemente bzw. die Innenwandelemente an unterschiedlichen Strukturbauteilen des Turbinenzwischengehäuses abgestützt. Dies verringert bzw. vermeidet die Übertragung von Lasten aus benachbarten Bauteilen des Turbinenzwischengehäuses bzw. der Gasturbine über die aus CMC hergestellten Außenwandelemente bzw. die Innenwandelemente.

Weitere Aspekte betreffend die Ausgestaltung eines Turbinenzwischengehäuses sind der durch die Anmelderin gleichzeitig eingereichten Patentanmeldung mit dem Titel "Turbinenzwischengehäuse und Dichtungsanordnung aus keramischen Faserverbund-Werkstoffen" zu entnehmen. Die dort beschriebenen Merkmale für die Ausgestaltung des Turbinenzwischengehäuses werden durch Bezugnahme in die vorliegende Anmeldung aufgenommen.

Nachfolgend wird die Erfindung unter Bezugnahme auf die anliegenden Figuren beispielhaft und nicht einschränkend insbesondere anhand eines Turbinenzwischengehäuses mit wenigstens einer erfindungsgemäßen Dichtungsanordnung beschrieben.

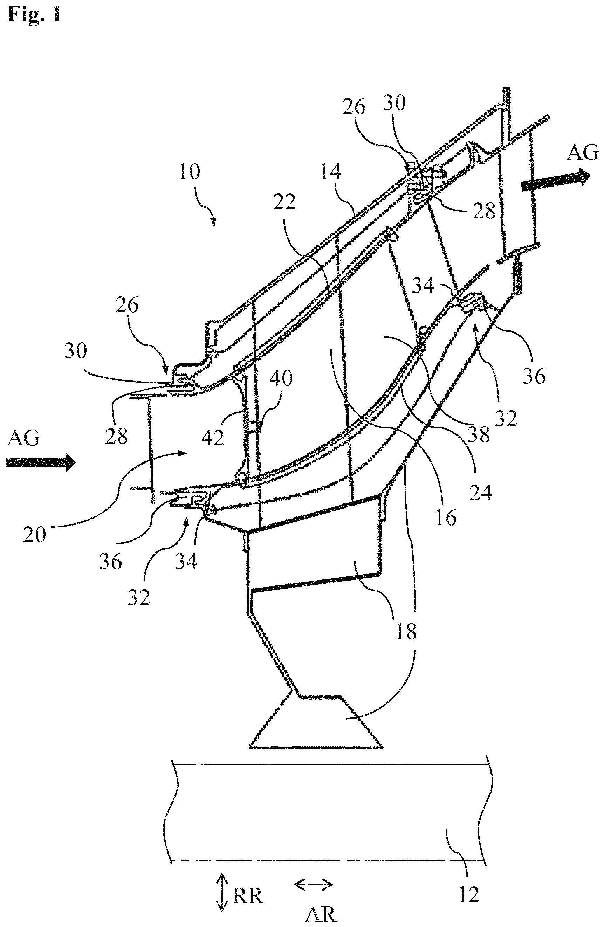

Figur 1 zeigt eine vereinfachte schematische Schnittdarstellung eines Turbinenzwischengehäuses 10, nachfolgend auch als TCF (turbine center frame) angesprochen. Das TCF 10 ist um eine in der Figur 1 nur schematisch angedeutete Welle 12 einer Gasturbine, insbesondere einer Fluggasturbine bzw. eines Mantelstromtriebwerks, angeordnet. Die Längserstreckung der Wellenanordnung 12 wird nachfolgend als axiale Richtung AR bezeichnet. Die hierzu orthogonale Richtung wird nachfolgend als radiale Richtung RR angesprochen.

Das Turbinenzwischengehäuse 10 umfasst radial außen liegend ein Außengehäuse 14. Dieses Außengehäuse 14 aus Metall ist mittels Trägerelementen 16 mit einer radial innenliegenden ringförmigen Haltestruktur 18 verbunden. Zwischen dem Außengehäuse 14 und der Haltestruktur 18 ist ein Strömungskanal 20 vorgesehen, durch den heiße Abgase, insbesondere von der Hochdruckturbine zur Niederdruckturbine strömen können, was durch die beiden Pfeile AG angedeutet ist. Der Strömungskanal 20 wird durch mehrere in Umfangsrichtung benachbarte und in radialer Richtung außen liegende Außenwandelemente 22 und durch mehrere in Umfangsrichtung benachbarte, in radialer Richtung innen liegende Innenwandelemente 24 begrenzt.

Die Außenwandelemente 22 sind mittels geeigneter Verbindungsanordnungen 26 mit dem Außengehäuse 14 verbunden. Im vorliegenden Beispiel weisen die Außenwandelemente 22 an ihren beiden axialen Enden hakenartige Vorsprünge 28 auf, die in Eingriff stehen mit korrespondierenden Gegenstücken 30 des Außengehäuses 14.

Die Innenwandelemente 24 sind mittels geeigneter Verbindungsanordnungen 32 mit der ringförmigen Haltestruktur 18 verbunden. Die Innenwandelemente 24 weisen an ihren axialen Enden hakenartige Vorsprünge 34 auf, die in entsprechende Gegenstücke 36 der Haltestruktur 18 aufgenommen sind.

Wie aus der Figur 1 ersichtlich, erstrecken sich die Trägerelemente 16, die auch als Stützstreben bzw. Streben bezeichnet werden können, in im Wesentlichen radialer Richtung durch den Strömungskanal 20 sowie ein jeweiliges betreffendes Innenwandelement 24 und Außenwandelement 22 hindurch. Um den Abgasstrom AG um die Trägerelemente 16 im Strömungskanal 20 herumzuführen, sind zwischen betreffenden Außenwandelementen 22 und Innenwandelementen 24 Strebenverkleidungselemente 38 vorgesehen, die die Trägerelemente 16 im Bereich des Strömungskanals 20 umgeben bzw. verkleiden und dabei vorzugsweise ein aerodynamisch optimiertes Strömungsprofil aufweisen. Die Strebenverkleidungselemente 38 sind dabei in jeweilige Öffnungen in den Außenwandelementen 22 bzw. den Innenwandelementen 24 aufgenommen, wobei die Strebenverkleidungselemente zwischen den betreffenden Außenwandelementen 22 und den betreffenden Innenwandelementen 24 schwimmend gelagert sind. Ferner weisen die Strebenverkleidungselemente 38 bezogen auf die Strömungsrichtung des Abgases AG an ihrem axial vorderen Ende einen Vorsprung 40 auf, welcher sich insbesondere in axialer Richtung AR in den Aufnahmeraum für das Trägerelement 16 erstreckt und sich am Trägerelement 16 abstützt. Dieser axiale Anschlag 40 sichert die Relativposition des Strebenverkleidungselements 38 zum Trägerelement 16 im Betrieb, wenn aufgrund des heißen Abgases AG Druckkräfte auf eine axiale vordere Seite 42 des Strebenverkleidungselements 38 wirken.

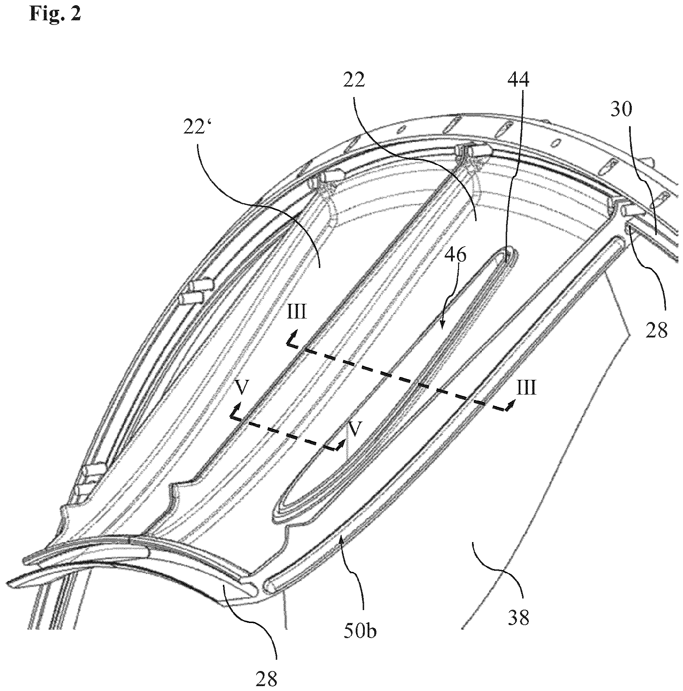

Figur 2 zeigt in einer schematischen perspektivischen Teildarstellung ein Außenwandelement 22 und ein in eine Öffnung 44 des Außenwandelements 22 eingesetztes Strebenverkleidungselement 38. Aus dieser Darstellung der Figur 2 ist auch der durch das Strebenverkleidungselement 38 gebildete Aufnahmeraum 46 ersichtlich, durch den sich das Trägerelement 16 hindurch erstrecken kann (Fig. 1). Wie bereits unter Bezugnahme auf die Figur 1 angedeutet, weist das Außenwandelement 22 in seinem axial vorderen Bereich (bezogen auf die Strömungsrichtung vom Abgas) den hakenartigen Befestigungsabschnitt 28, wobei in der Figur 2 kein entsprechendes Gegenstück 30 des Außengehäuses 14 (Figur 1) dargestellt ist. Das axial hintere Ende der Aufnahmeplatte 22 weist ein weiteres hakenartiges Befestigungselement 28 auf, das mit einem entsprechenden Gegenstück 30 des Außengehäuses verbunden ist.

Das hier beispielhaft für ein Außenwandelement 22 Erläuterte gilt in analoger Weise auch für ein Innenwandelement 24, auch wenn ein solches nicht in einer entsprechenden Darstellung in der vorliegenden Anmeldung enthalten ist. Auch die Innenwandelemente 24 verfügen über eine zur Öffnung 44 analoge Öffnung, in welche ein radial unteres Ende des Strebenverkleidungselements 38 aufgenommen werden kann.

In Bezug auf die Figur 2 wird noch darauf hingewiesen, dass von den in Umfangsrichtung benachbarten Außenwandelementen 22, nicht jedes über eine Öffnung 44 verfügt bzw. verfügen muss, da es in der Regel weniger Trägerelemente 16 gibt als Außenwandelemente 22 und Innenwandelemente 24. Dies wird insbesondere auch dadurch gezeigt, dass es ein Außenwandelement 22' gibt, in dem keine Öffnung 44 vorgesehen ist.

Die Außenwandelemente 22, die Innenwandelemente 24 und die Strebenverkleidungselemente 38 sind teilweise oder vollständig aus keramischen Faserverbundwerkstoffen (CMC) hergestellt. Wie bereits einleitend erwähnt worden ist, verfügen solche CMC -Bauteile aufgrund ihrer ungünstigen Versagenscharakteristik über eine geringere nutzbare Festigkeit verglichen mit konventionellen Metallbauteilen, die bis anhin für Turbinenzwischengehäuse eingesetzt worden sind. Daher werden für die Ausgestaltung des Strömungskanals 20 mehr Außenwandelemente 22 aus CMC benötigt, damit jedes einzelne Außenwandelement und die Außenwand insgesamt den thermisch-mechanischen Belastungen standhalten kann. Dies gilt in analoger Weise auch für die Innenwandelemente 24 und die hieraus gebildete Innenwand des Strömungskanals 20.

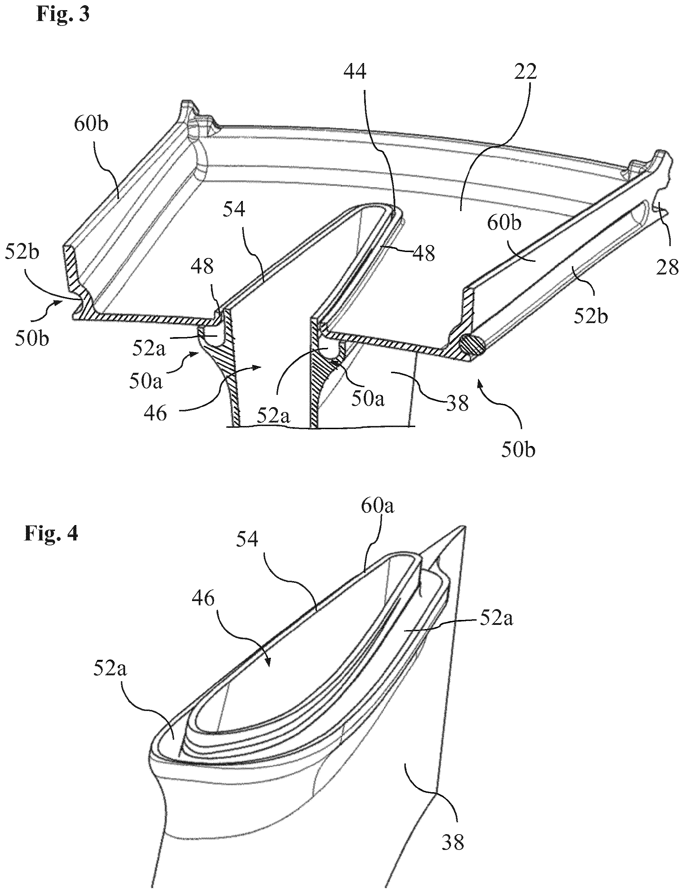

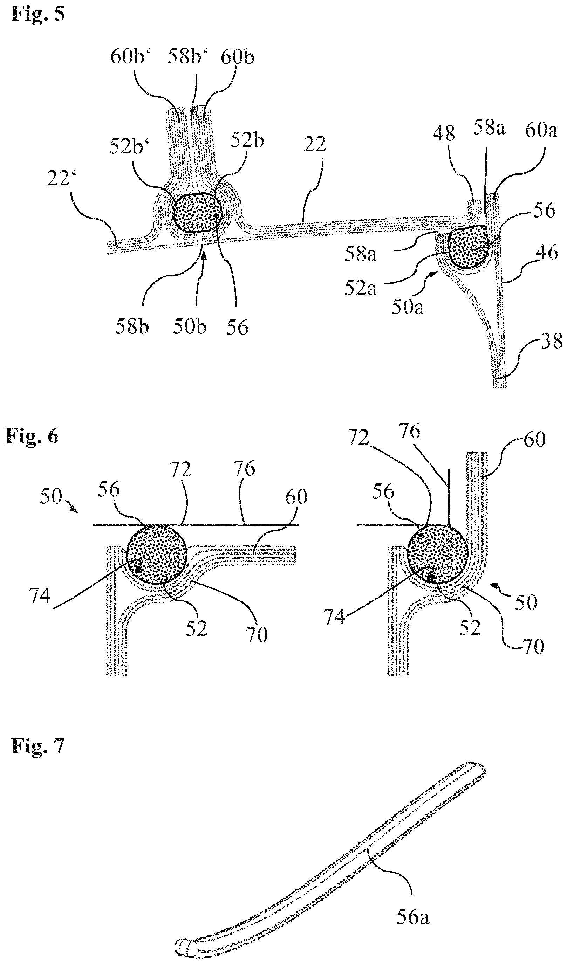

Figur 3 zeigt eine teilgeschnittene schematische Perspektivdarstellung des Außenwandelements 22 und dem darin aufgenommenen Strebenverkleidungselement 38 etwa entlang einer Schnittlinie III-III der Figur 2. Das Strebenverkleidungselement 38 ist in der Öffnung 44 des Außenwandelements 22 aufgenommen. Die Öffnung 44 kann vorzugsweise durch einen in radiale Richtung weisenden Wulst oder flanschartigen Abschnitt 48 begrenzt sein. Das Strebenverkleidungselement 38 und das Außenwandelement 22 sind mittels einer Verkleidungsdichtungsanordnung 50a gegeneinander abgestützt und abgedichtet. Die Verkleidungsdichtungsanordnung 50a umfasst eine am Strebenverkleidungselement 38 ausgebildete Vertiefung 52a. Die Vertiefung 52a ist vorzugsweise im Querschnitt U-förmig bzw. halbkreisförmig oder bogenförmig ausgestaltet. Im Falle des Strebenverkleidungselements 38 ist die Vertiefung 52a durchgehend um eine den Aufnahmeraum 46 begrenzende Wandung 54 angeordnet. In die Vertiefung 52a kann zur Abdichtung des Übergangs zwischen Strebenverkleidungselement 38 und Außenwandelement 22 ein Dichtungsstrang 56 eingelegt werden, der beispielhaft aus der Figur 7 schematisch ersichtlich ist. Ein solcher Dichtungsstrang ist b e-vorzugt als Gewebeschlauch ausgeführt mit einer nachgiebigen bzw. deformierbaren Füllung. Die Füllung kann aus in Längsrichtung des Dichtungsstrangs 56 ausgerichteten Keramikfasern gebildet sein. Alternativ kann die Füllung auch ungerichtete kürzere Keramikfasern enthalten oder eine Art Keramikkörner oder Keramikgranulat. Der Gewebeschlauch kann aus einem keramischen Gewebe oder einem metallischen Gewebe hergestellt sein.

Die in Bezug auf die Figur 3 beschriebene Dichtungsanordnung 50a zwischen dem Strebenverkleidungselement 38 und dem Außenwandelement 22 kann in analoger Weise zwischen dem Strebenverkleidungselement 38 und dem Innenwandelement 24 ausgeführt sein. Dreht man die Figur 3 vor sich liegend um 180° in der Zeichenebene, so dass die Figur 3 auf dem Kopf steht, könnte sie auch als Prinzipdarstellung für die Anordnung des Strebenverkleidungselements 38 an einem Innenwandelement 24 angesehen werden.

Die Figur 4 zeigt den radial oberen Bereich des Strebenverkleidungselements 38 in vereinfachter Perspektivdarstellung. Ersichtlich sind die Vertiefung 52a sowie die den Aufnahmeraum 46 begrenzende Wandung 54. Aus der Figur 4 ist auch die möglichst stromlinienförmige Ausgestaltung des Strebenverkleidungselements 38 ersichtlich, so dass es mit möglichst wenig Widerstand von heißem Abgas im Strömungskanal umströmt werden kann.

Figur 5 zeigt eine vereinfachte und schematische Schnittdarstellung etwa entsprechend der Schnittlinie V-V der Figur 2. In Figur 5 ist eine Außenwanddichtungsanordnung 50b ersichtlich, welche zwischen den benachbarten Außenwandelementen 22 und 22' vorgesehen ist. Eine solche Außenwanddichtungsanordnung 50b ist auch teilweise in der Figur 3 ersichtlich und mit den gleichen Bezugszeichen gekennzeichnet. Die Dichtungsanordnung 50b umfasst eine im Außenwandelement 22 bzw. im Außenwandelement 22' ausgebildete Vertiefung 52b, bzw. 52b', wobei auch diese Vertiefung 52b, 52b' im Querschnitt im Wesentlich U-förmig bzw. halbkreisförmig oder bogenförmig ausgebildet ist. In die Vertiefung 52b, 52b' ist ein Dichtungsstrang 56 (Figur 7) aufgenommen, so dass die beiden Außenwandelemente 22, 22' mittels der Dichtungsanordnung 50b gegeneinander abgestützt und abgedichtet sind. In der Figur 5 ist auf der rechten Seite auch die Verkleidungsdichtungsanordnung 50a ersichtlich mit der am Strebenverkleidungselement 38 vorgesehenen Vertiefung 52a und dem darin aufgenommenen Dichtungsstrang 56. Auf dem Dichtungsstrang 56 der Verkleidungsdichtungsanordnung 50a liegt das Außenwandelement 22 mit dem Randbereich 48, der Öffnung 44 auf. Aus der Figur 5 ist ferner ersichtlich, dass zwischen angrenzenden Außenwandelementen 22, 22' bzw. zwischen dem Außenwandelement 22 und dem Strebenverkleidungselement 38 Dehnungsspalten 58a bzw. 58b ausgebildet sind.

Figur 6 zeigt beispielhaft zwei Dichtungsanordnungen 50 in einer verallgemeinerten Form der Darstellung. Jede Dichtungsanordnung 50 umfasst ein ersten Bauteil 70 und ein zweites Bauteil 72. Im jeweiligen ersten Bauteil 70 ist eine Vertiefung 52 ausgebildet mit einem Innabschnitt 74. In der Vertiefung 52 ist ein Dichtungsstrang 56 aufgenommen. Der Dichtungsstrang 56 liegt dabei an der gekrümmten bzw. gebogenen Kontur des Innenabschnitts 74 an. Die Vertiefungen 52 weisen in Figur 6 jeweils an ihrem rechten Rand einen Flanschabschnitt 60 auf, der dazu dienen kann, im Bereich der Dichtungsanordnung 50 wirkende Kräfte von benachbarten Bauteilen abzustützen. So kann der Flanschabschnitt 60 des ersten Bauteils 70 einen jeweiligen flanschartigen Abschnitt 76 des zweiten Bauteils 72 abstützen.

Die Ausgestaltung mit einem abgewinkelten Flanschabschnitt 60 gemäß der linken Seite der Figur 6 ist beispielsweise auch für die Flanschabschnitte 60b bzw. 60b' der Außenwandelemente 22 bzw. 22' der Figur 5 umgesetzt. Bei diesem Beispiel bilden die beiden Außenwandelemente 22 bzw. 22' das erste bzw. das zweite Bauteil einer Dichtungsanordnung. Eine Konstellation entsprechend der rechten Seite der Figur 6 mit zum Rand der Vertiefung 52 parallelem Flanschabschnitt 60, welcher den Rand erhöht bzw. verlängert ist beispielsweise beim Strebenverkleidungselement 38 als Flanschabschnitt 60a umgesetzt (Fig. 5). Hier bildet beispielsweise das Strebenverkleidungselement 38 das erste Bauteil und das Außenwandelemente 22 bildet das zweite Bauteil einer Dichtungsanordnung mit Dichtungsstrang 56.

Der Flanschabschnitt 60a des Strebenverkleidungselements 38 ist, wie dies aus Figur 4 ersichtlich ist, umlaufend um den Aufnahmeraum 46 angeordnet. Somit kann der Flanschabschnitt 60a in im Wesentlichen radialer Richtung mit Spiel (Dehnungsspalt 58a) in die Öffnung 44 des Außenwandelements 22 aufgenommen werden. Der Flanschabschnitt 60a kann sich bei mechanisch-thermischer Belastung und damit verbundener Ausdehnung der miteinander verbundenen Bauteile am Wulst bzw. Flanschabschnitt 48 der Öffnung 44 abstützen, so dass das Strebenverkleidungselement 38 und das Außenwandelement 22 in diesem Bereich aneinander abgestützt sind und insgesamt eine stabilisierende Wirkung erreicht wird.

Die Flanschabschnitte 60b bzw. 60b' weisen zwischen sich die Dehnungsspalte 58b auf und können bei mechanisch-thermischer Belastung und unter Ausdehnung der Außenwandelemente 22 bzw. 22' aneinander anliegen, um die auftretenden Kräfte abzustützen. Die Flanschabschnitte 60b bzw. 60b' wirken auch als Verstärkungsrippen, welche dem Außenwandelement 22 bzw. 22' mehr Stabilität geben.

Wie oben bereits zur Figur 3 erwähnt, könnte auch die Figur 5 in der Zeichenebene um 180° gedreht werden, so dass sie auf dem Kopf steht, wodurch man ein Prinzipbild für die Situation bei Innenwandelementen bekommen könnte.

Wie aus den Figuren 5 und 6 ersichtlich ist, sind für die Außenwandelemente 22, 22' bzw. das Strebenverkleidungselement 38 bzw. für das erste Bauteil 70 und das zweite Bauteil 72 durch die dünnen schwarzen Linien die bevorzugten Lagen der Fasergewebe der Keramikfasern der CMC-Bauteile dargestellt. Es wird insbesondere darauf hingewiesen, dass alle Vertiefungen 52 (Figur 6), 52a und 52b (Figur 5) durch durchgängige gekrümmte bzw. gebogene Keramikfasern gebildet werden. Da Keramikfasern nicht mit beliebig kleinen Radien gebogen werden können, weisen alle Vertiefungen einen relativ großen Krümmungsradius auf. Der in den Vertiefungen ausgenommene Dichtungsstrang 56 weist einen Radius bzw. Durchmesser auf, der etwa dem Radius der Vertiefung entspricht, so dass der Dichtungsstrang 56 satt in der Vertiefung 52 aufgenommen ist. Da der Dichtungsstrang 56 in Querrichtung deformierbar ist, können zwischen den Außenwandelementen 22, bzw. zwischen den Innenwandelementen 24 bzw. zwischen den Strebenverkleidungselementen und den Wandelementen vorhandene Fertigungstoleranzen bzw. notwendiges Spiel dennoch ausreichend und sicher abgedichtet werden (siehe beispielsweise deformiert dargestellter Dichtungsstrang 56 der Dichtungsanordnung 50a in Figur 5). Die eingesetzten Dichtungsstränge passen sich in ihrer Form den thermisch-mechanischen Gegebenheiten an, wenn sich die unterschiedlichen Bauteile im Betrieb der Gasturbine ausdehnen.

Durch die Verwendung von CMC für die ersten bzw. zweiten Bauteile 70, 72, die Außenwandelemente 22, die Innenwandelemente 24 und die Strebenverkleidungselemente 38 kann Gewicht eingespart werden verglichen mit einer herkömmlichen Metallbauweise sowie höhere Gastemperaturen gefahren werden. Da zur Bildung der gesamten Außenwand bzw. der gesamten Innenwand mehr einzelne Außenwandelemente bzw. Innenwandelemente aneinander angeordnet und gegenseitig abgedichtet werden müssen, können die deformierbaren Dichtungsstränge mit relativ großem Durchmesser vorteilhaft eingesetzt werden.

Durch die gemäß den Figuren 5 und 6 angedeuteten Faserverläufe bzw. Gewebelagen, insbesondere im Bereich der Vertiefungen, können solche Vertiefungen bzw. Dichtungsschalen ohne mechanische Nacharbeit in einem Schritt mit dem gesamten CMC-Bauteil (Außenwandelement 22, Innenwandelement 24, Strebenverkleidungselement 38) hergestellt werden.

Hierdurch kann die bei CMC-Bauteilen auftretende Problematik der Nichtanwendbarkeit von elektrischen bzw. elektrochemischen Abtrage-Verfahren vermieden werden.

Insgesamt ergibt sich ein neuartiges Konzept einer Dichtungsanorndung aus einem ersten und einem zweiten Bauteil mit dazwischen aufgenommenem Dichtungsstrang. Dies ist insbesondere exemplarisch dargestellt durch den Aufbau von Verkleidungselementen mit Außenwandelementen, Innenwandelementen und Strebenverkleidungselementen aus keramischen Faserverbund-Werkstoffen im Zusammenspiel mit einer veränderten Befestigung von Außenwandelementen und Innenwandelementen an den tragenden Strukturen des Turbinenzwischengehäuses. Die gewählte Konstruktion für das Turbinenzwischengehäuse, bei der die Außenwandelemente am Außengehäuse befestigt sind, die Innenwandelemente an der ringförmigen Haltestruktur befestigt sind und die Strebenverkleidungselemente schwimmend zwischen betreffenden Außenwandelementen und betreffenden Innenwandelementen aufgenommen sind, ermöglicht es, die Übertragung von Lasten aus benachbarten Bauteilen über die CMC-Bauteile (Außenwandelemente, Innenwandelemente, Strebenverkleidungselemente) zu vermeiden. Dies führt insgesamt zu einer geringeren mechanischen Belastung dieser CMC-Bauteile des Turbinenzwischengehäuses.

Auch wenn die Dichtungsanordnung 50 (Fig. 6) insbesondere unter Bezugnahme auf ein Turbinenzwischengehäuse genauer erläutert worden ist, stellt dies für die Verwendung und den Einsatz der Dichtungsanordnung keine Einschränkung dar. Vielmehr kann eine solche Dichtungsanordnung auch bei anderen Komponenten einer Turbine, insbesondere Fluggasturbine, eines Flugzeugs, eines Fahrzeugs, einer sonstigen Maschine oder Vorrichtung eingesetzt werden. Die vorgestellte Dichtungsanordnung kann insbesondere auch überall dort eingesetzt werden, wo metallische Bauteile durch mehrere CMC-Bauteile ersetzt werden sollen und die CMC-Bauteil gegeneinander abgedichtet werden müssen. Ferner erlaubt die hier vorgestellte Dichtungsanordnung auch eine schwimmende Lagerung von Bauteilen.

### Bezugszeichenliste

- 10: Turbinenzwischengehäuse
- 12: Wellenanordnung
- 14: Außengehäuse
- 16: Trägerelement
- 18: Haltestruktur
- 20: Strömungskanal
- 22: Außenwandelement
- 24: Innenwandelement
- 26: Verbindungsanordnung
- 28: Hakenartiger Vorsprung
- 30: Gegenstück
- 32: Verbindungsanordnung
- 34: Hakenartiger Vorsprung
- 36: Gegenstück
- 38: Strebenverkleidungselement
- 40: Anschlag
- 42: axiale vordere Seite
- 44: Öffnung
- 46: Aufnahmeraum
- 48: flanschartiger Abschnitt
- 50a: Verkleidungsdichtungsanordnung
- 50b: Außenwanddichtungsanordnung
- 52a/b: Vertiefung
- 54: Wandung
- 56: Dichtungsstrang
- 58a/b: Dehnungsspalt
- 60a/b: Flanschabschnitt
- 70: Erstes Bauteil
- 72: Zweites Bauteil
- 74: Innenabschnitt
- 76: Flanschartiger Abschnitt

## Patentansprüche

1. Dichtungsanordnung für eine Gasturbine umfassend ein erstes Bauteil (70), das wenigstens teilweise aus keramischen Faserverbundstoffen hergestellt ist,
ein zweites Bauteil (72), das wenigstens teilweise aus keramischen Faserverbundstoffen hergestellt ist,
ein Dichtungselement (56), das zwischen dem ersten Bauteil (70) und dem zweiten Bauteil (72) aufgenommen ist, wobei das Dichtungselement (56) als Dichtungsstrang ausgebildet ist, insbesondere als Gewebeschlauch aus metallischen oder/und keramischen Materialien,
wobei am ersten Bauteil (70) oder/und am zweiten Bauteil (72) wenigstens eine das Dichtungselement (56) aufnehmende Vertiefung (52) ausgebildet ist, wobei die wenigstens eine Vertiefung (52) ein Schnittprofil aufweist mit einem zum Dichtungselement (56) hin konkaven Innenabschnitt (74), **dadurch gekennzeichnet, dass** der Innenabschnitt (74) einen Krümmungsradius aufweist, und dass die wenigstens eine Vertiefung (52) durch durchgängige gekrümmte Keramikfasern des keramischen Faserverbundstoffes gebildet ist.

2. Dichtungsanordnung nach Anspruch 1, **dadurch gekennzeichnet, dass** die Keramikfasern so ausgerichtet sind, dass sie im Wesentlichen parallel zur Schnittebene des Schnittprofils liegen.

3. Dichtungsanordnung nach Anspruch 1 oder 2, **dadurch gekennzeichnet, dass** der Dichtungsstrang (56) einen Gewebeschlauch mit einer elastischen oder/und deformierbaren Füllung umfasst, wobei die Füllung vorzugsweise aus sich in Längsrichtung des Dichtungsstrangs erstreckenden Keramikfasern gebildet ist.

4. Dichtungsanordnung nach einem der vorhergehenden Ansprüche, **dadurch gekennzeichnet, dass** im Bereich der Vertiefung (52) des jeweiligen ersten oder zweiten Bauteils (70, 72) an wenigstens einem Rand der Vertiefung (52) ein sich anschließender Flanschabschnitt (60) ausgebildet ist.

5. Dichtungsanordnung nach Anspruch 4, **dadurch gekennzeichnet, dass** das erste und das zweite Bauteil (70, 72) mittels eines Flanschabschnitts (60) oder mittels mehrerer Flanschabschnitte (60, 76) gegeneinander abgestützt sind.

6. Dichtungsanordnung nach einem der Ansprüche 1 bis 4, **dadurch gekennzeichnet, dass** zwischen dem ersten Bauteil (70) und dem zweiten Bauteil (72), die aneinander angeordnet sind, ein Dehnungsspalt (58a, 58b') ausgebildet ist.

7. Dichtungsanordnung nach einem der vorhergehenden Ansprüche, **dadurch gekennzeichnet, dass** die Vertiefung (52b) des ersten Bauteils (22) und die Vertiefung (52b') des zweiten Bauteils (22') einander gegenüber angeordnet sind, derart dass der Dichtungsstrang (56) von den beiden Vertiefungen (52b, 52b') umgeben und zwischen den beiden Vertiefungen aufgenommen ist.

8. Turbinenzwischengehäuse (10) für eine Gasturbine, insbesondere eine Fluggasturbine, umfassend:
mehrere in Umfangsrichtung aufeinanderfolgend angeordnete Außenwandelemente (22);
mehrere in Umfangsrichtung aufeinanderfolgend angeordnete Innenwandelemente (24), wobei die Außenwandelemente (22) und die Innenwandelemente (24) durch die einander zugewandten Innenseiten einen Strömungskanal (20) für Abgas begrenzen;
mehrere in radialer Richtung (RR) zwischen einem betreffenden Außenwandelement (22) und einem betreffenden Innenwandelement (24) angeordnete Strebenverkleidungselemente (38),
ein die Außenwandelemente (22) und die Innenwandelemente (24) umgebendes Außengehäuse (14), und
eine ringförmige Haltestruktur (18), die einen Lagerbereich einer Welle (12) der Gasturbine, insbesondere der Welle der Hochdruckturbine umgibt,
wobei die Strebenverkleidungselemente (38) derart ausgebildet sind, dass sie einen Aufnahmeraum (46) aufweisen zur Aufnahme von Trägerelementen (16), die sich von der ringförmigen Haltestruktur (18) in im Wesentlichen radialer Richtung (RR) zu dem Außengehäuse (14) durch den Strömungskanal (20) hindurch erstrecken, so dass durch den Strömungskanal (20) strömendes Abgas durch die Strebenverkleidungselemente (38) um die Trägerelemente (16) herum geleitet wird, **dadurch gekennzeichnet, dass**
es ferner wenigstens eine Dichtungsanordnung nach einem der vorhergehenden Ansprüche umfasst, wobei ein jeweiliges Außenwandelement (22) und/oder ein jeweiliges Innenwandelement (24) und/oder ein jeweiliges Strebenverkleidungselement ein erstes oder ein zweites Bauteil (70, 72) der wenigstens einen Dichtungsanordnung bildet.

9. Gasturbine, insbesondere Fluggasturbine, mit einem Turbinenzwischengehäuse (10) nach Anspruch 8.

## Claims

1. Sealing arrangement for a gas turbine, comprising
a first component (70) made at least partially from ceramic fiber composite materials,
a second component (72) made at least partially from ceramic fiber composite materials,
a sealing element (56) which is received between the first component (70) and the second component (72), wherein the sealing element (56) is designed as a sealing strip, particularly as a fabric hose made of metallic and/or ceramic materials,
wherein at least one depression (52) receiving the sealing element (56) is formed on the first component (70) and/or on the second component (72), wherein the at least one depression (52) has a sectional profile with an inner section (74) which is concave toward the sealing element (56), **characterized in that** the inner section (74) has a radius of curvature and that the at least one depression (52) is formed by continuously curving ceramic fibers of the ceramic fiber composite material.

2. Sealing arrangement according to claim 1, **characterized in that** the ceramic fibers are aligned such that they lie essentially parallel to the sectional plane of the sectional profile.

3. Sealing arrangement according to claim 1 or 2, **characterized in that** the sealing strip (56) comprises a fabric hose with a resilient and/or deformable filling, wherein the filling is preferably formed from ceramic fibers extending in the longitudinal direction of the sealing strip.

4. Sealing arrangement according to one of the previous claims, **characterized in that**, in the region of the depression (52) of the respective first or second component (70, 72), an adjoining flange section (60) is formed on at least one edge of the depression (52).

5. Sealing arrangement according to claim 4, **characterized in that** the first and the second component (70, 72) are supported against one another by means of a flange section (60) or by means of a plurality of flange sections (60, 76).

6. Sealing arrangement according to one of claims 1 to 4, **characterized in that** an expansion gap (58a, 58b') is formed between the first component (70) and the second component (72), which are arranged next to one another.

7. Sealing arrangement according to one of the previous claims, **characterized in that** the depression (52b) of the first component (22) and the depression (52b') of the second component (22') are arranged opposite one another such that the sealing strip (56) is surrounded by the two depressions (52b, 52b') and received between the two depressions.

8. Turbine intermediate housing (10) for a gas turbine, particularly an aircraft gas turbine, comprising:
a plurality of outer wall elements (22) arranged consecutively in the circumferential direction;
a plurality of inner wall elements (24) arranged consecutively in the circumferential direction, wherein the outer wall elements (22) and the inner wall elements (24) delimit a flow channel (20) for exhaust gas by means of their mutually facing inner sides;
a plurality of strut cladding elements (38) arranged in the radial direction (RR) between a respective outer wall element (22) and a respective inner wall element (24),
an outer housing (14) which surrounds the outer wall elements (22) and the inner wall elements (24), and
an annular retaining structure (18) which surrounds a bearing region of a shaft (12) of the gas turbine, particularly the shaft of the high-pressure turbine,
wherein the strut cladding elements (38) are designed such that they have a receiving space (46) for receiving carrier elements (16) which extend essentially in the radial direction (RR) from the annular retaining structure (18) to the outer housing (14) through the flow channel (20), with the result that exhaust gas flowing through the flow channel (20) is guided around the carrier elements (16) by the strut cladding elements (38), **characterized in that**
said turbine intermediate housing further comprises at least one sealing arrangement according to one of the previous claims, wherein a respective outer wall element (22) and/or a respective inner wall element (24) and/or a respective strut cladding element forms a first or a second component (70, 72) of the at least one sealing arrangement.

9. Gas turbine, particularly an aircraft gas turbine, having a turbine intermediate housing (10) according to claim 8.

## Revendications

1. Système d'étanchéification pour une turbine à gaz, comprenant
un premier composant (70) qui est au moins partiellement en matière composite en fibres à céramique,
un second composant (72) qui est au moins partiellement en matière composite en fibres à céramique,
un élément d'étanchéification (56) qui est logé entre le premier composant (70) et le second composant (72), l'élément d'étanchéification (56) étant réalisé sous la forme d'un bourrelet d'étanchéification, en particulier sous la forme d'un tuyau tissé en matières métalliques et/ou céramiques,
dans lequel au moins un évidement (52) logeant l'élément d'étanchéification (56) est réalisé au niveau du premier composant (70) et/ou au niveau du second composant (72), l'au moins un évidement (52) présentant un profil de coupe comportant une partie intérieure (74) concave en direction de l'élément d'étanchéification (56), **caractérisé en ce que** la section intérieure (74) présente un rayon de courbure, et **en ce que** l'au moins un évidement (52) est formé par des fibres céramiques continues incurvées de la matière composite en fibres à céramique.

2. Système d'étanchéification selon la revendication 1, **caractérisé en ce que** les fibres céramiques sont orientées de telle manière qu'elles sont sensiblement parallèles au plan de coupe du profil de coupe.

3. Système d'étanchéification selon la revendication 1 ou 2, **caractérisé en ce que** le bourrelet d'étanchéification (56) comprend un tuyau tissé comportant une charge élastique et/ou déformable, la charge étant de préférence formée de fibres céramiques s'étendant dans la direction longitudinale du bourrelet d'étanchéification.

4. Système d'étanchéification selon l'une des revendications précédentes, **caractérisé en ce que**, dans la zone de l'évidement (52) du premier ou du second composant (70, 72) respectif, une partie de bride (60) adjacente est réalisée au niveau d'au moins un bord de l'évidement (52).

5. Système d'étanchéification selon la revendication 4, **caractérisé en ce que** le premier et le second composant (70, 72) reposent l'un sur l'autre par l'intermédiaire d'une partie de bride (60) ou par l'intermédiaire de plusieurs parties de bride (60, 76).

6. Système d'étanchéification selon l'une des revendications 1 à 4, **caractérisé en ce qu'**un interstice de dilatation (58a, 58b') est formé entre le premier composant (70) et le second composant (72), lesquels sont disposés côte à côte.

7. Système d'étanchéification selon l'une des revendications précédentes, **caractérisé en ce que** l'évidement (52b) du premier composant (22) et l'évidement (52b') du second composant (22') sont disposés l'un en face de l'autre de telle manière que le bourrelet d'étanchéification (56) soit entouré des deux évidements (52b, 52b') et logé entre les deux évidements.

8. Carter intermédiaire de turbine (10) pour une turbine à gaz, en particulier une turbine à gaz d'avion, comprenant :
une pluralité d'éléments de paroi extérieure (22) disposés successivement dans la direction circonférentielle ;
une pluralité d'éléments de paroi intérieure (24) disposés successivement dans la direction circonférentielle, les éléments de paroi extérieure (22) et les éléments de paroi intérieure (24) délimitant, par les côtés intérieurs orientés les uns vers les autres, un conduit d'écoulement (20) pour les gaz d'échappement ;
une pluralité d'éléments de revêtement d'entretoise (38) disposés dans la direction radiale (RR) entre un élément de paroi externe (22) donné et un élément de paroi interne (24) donné,
un carter extérieur (14) entourant les éléments de paroi extérieure (22) et les éléments de paroi intérieure (24), et
une structure de retenue annulaire (18) entourant une zone de palier d'un arbre (12) de la turbine à gaz, en particulier l'arbre de la turbine à haute pression,
dans lequel les éléments de revêtement d'entretoise (38) sont conçus de manière à comporter un espace de logement (46) pour loger les éléments de support (16) qui s'étendent de la structure de retenue annulaire (18) dans une direction sensiblement radiale (RR) vers le carter extérieur (14) à travers le conduit d'écoulement (20), de telle manière que les gaz d'échappement circulant à travers le conduit d'écoulement (20) soient conduits à travers les éléments de revêtement d'entretoise (38) autour des éléments de support (16), **caractérisé en ce qu'**il
comprend en outre au moins un système d'étanchéification selon l'une des revendications précédentes, un élément de paroi extérieure (22) respectif et/ou un élément de paroi intérieure (24) respectif et/ou un élément de revêtement d'entretoise respectif formant un premier ou un second composant (70, 72) de l'au moins un système d'étanchéification.

9. Turbine à gaz, en particulier turbine à gaz d'avion, comportant un carter intermédiaire de turbine (10) selon la revendication 8.
